# EUROPÄISCHE PATENTSCHRIFT

(11) **EP 3 334 679 B1**
(45) Veröffentlichungstag und Bekanntmachung des Hinweises auf die Patenterteilung: **26.02.2020**
(21) Anmeldenummer: 16748122.5
(22) Anmeldetag: 08.08.2016
(51) Int. Cl.: B66B 25/00

(54) **PERSONENFÖRDERVORRICHTUNG MIT ADAPTIVEM SCHWINGUNGSDÄMPFUNGSSYSTEM SOWIE VERFAHREN ZUR REDUZIERUNG VON AUF PERSONENFÖRDERVORRICHTUNGEN ÜBERTRAGENEN GEBÄUDESCHWINGUNGEN**
PERSON-CONVEYING DEVICE WITH AN ADAPTIVE VIBRATION-DAMPING SYSTEM, AND METHOD FOR REDUCING BUILDING VIBRATIONS TRANSMITTED TO PERSON-CONVEYING DEVICES
DISPOSITIF DE TRANSPORT DE PERSONNES COMPRENANT UN SYSTÈME D'AMORTISSEMENT DE VIBRATIONS ADAPTATIF, AINSI QUE PROCÉDÉ SERVANT À RÉDUIRE DES VIBRATIONS DANS LES BÂTIMENTS TRANSMISES AUX DISPOSITIFS DE TRANSPORT DE PERSONNES

(30) Priorität: 14.08.2015 DE 102015215531
(43) Veröffentlichungstag der Anmeldung: 20.06.2018
(73) Patentinhaber: thyssenkrupp Elevator AG, 45143 Essen (DE); thyssenkrupp AG, 45143 Essen (DE)
(72) Erfinder: LANDSBECK, Patrick, 65451 Kelsterbach (DE); KEITZEL, Hanna, 22765 Hamburg (DE); LINDEMEIER, Detlev, 21465 Reinbek (DE)
(74) Vertreter: thyssenkrupp Intellectual Property GmbH
(86) Internationale Anmeldenummer: PCT/EP2016/068854
(87) Internationale Veröffentlichungsnummer: WO 2017/029144

(56) Entgegenhaltungen:
- JP-A- 2006 103 825
- JP-A- 2013 241 227
- KR-B1- 101 096 780

## Beschreibung

Die Erfindung betrifft eine Personenfördervorrichtung, insbesondere eine Fahrtreppe, welche ein erstes Niveau eines Gebäudes, insbesondere eine erste Etage eines Gebäudes, mit einem zweiten Niveau des Gebäudes, insbesondere mit einer zweiten Etage des Gebäudes, verbindet. Die Personenfördervorrichtung umfasst dabei ein Traggerüst mit wenigstens einem Trägerelement zur Anordnung an dem Gebäude. In dem Traggerüst ist dabei üblicherweise ein aus einer Vielzahl von miteinander verbundenen Trittelementen gebildetes endloses Transportband, insbesondere ein aus einer Vielzahl von Stufen gebildetes endloses Stufenband, angeordnet. An dem Traggerüst sind ferner üblicherweise eine Balustrade mit Handlauf sowie Verkleidungselemente angeordnet.

Durch die Anbindung der Personenfördervorrichtung an das Gebäude können auftretende Schwingungen von der Personenfördervorrichtung auf das Gebäude und entsprechend auch von dem Gebäude auf die Personenfördervorrichtung übertragen werden. Gebäudeschwingungen können dabei insbesondere in seismisch aktiven Gebieten durch Erdbeben ausgelöst werden. Die dabei entstehenden Gebäudeschwingungen können dabei Schäden an der Personenfördervorrichtung hervorrufen und sogar zum Einsturz der Personenfördervorrichtung führen. Daher ist es wünschenswert entsprechende Schutzmaßnahmen vorzusehen, die geeignet sind, eine Personenfördervorrichtung robuster gegen Gebäudeschwingungen, insbesondere robuster gegen durch Erdbeben verursachte Gebäudeschwingungen zu machen.

In der Druckschrift WO 02/10054 A wird hierzu ein erbebensicheres Auflager für Fahrtreppen oder Fahrsteige offenbart. Auflager sind dabei zur bauseitigen Lagerung eines Trägers an Fahrtreppenenden beziehungsweise Fahrsteigenden vorgesehen. Diese Konstruktion reduziert dabei nicht oder zumindest nicht Wesentlich die Übertragung von Schwingungen des Gebäudes auf die Fahrtreppe beziehungsweise den Fahrsteig.

Aus der Druckschrift JP 09058956 ist zudem ein oberes Auflager für eine Fahrtreppe bekannt, das gegen Längsbewegungen, die durch Erdbeben ausgelöst werden, gesichert ist. Auch diese Konstruktion dient im Wesentlichen nicht der Reduzierung von auf die Fahrtreppe übertragenen Gebäudeschwingungen.

Ferner ist aus der Druckschrift CN 201857195 U eine Fahrtreppe bekannt, die eine seismische Hemmung zwischen Gebäude und Fahrtreppe vorsieht. Ähnlich wie die zuvor genannten Auflager soll diese Hemmung dabei ein gewisses Verschieben der Fahrtreppe am Tragwerk des Gebäudes ermöglichen. Schwingungen können dabei weiter von dem Gebäude auf die Fahrtreppe übertragen werden.

Aus der Druckschrift JP 2013 241227 A ist eine Fahrtreppe mit einer Tragkonstruktion bekannt, bei der zwischen den Auflagerwinkeln der Tragkonstruktion und einem Gebäude passive Schwingungsdämpfer zur Verringerung von durch Erdbeben verursachten Schwingungen angeordnet sind.

Die Druckschrift JP 2006 103825 A offenbart eine Fahrtreppe mit einer Tragkonstruktion, wobei die Tragkonstruktion eine etwa mittig an der Tragkonstruktion angeordnete aktive Dämpfungseinrichtung umfasst, die dazu ausgebildet ist, Schwingungen der Tragkonstruktion, insbesondere im Fall des Auftretens eines Erdbebens, zu reduzieren.

Weiter sind aus der Druckschrift KR 101 096 780 B1 EMI-MR-Dämpfer als Dämpfungseinrichtungen bekannt.

Die Druckschrift EP 1 262 440 A1 offenbart darüber hinaus zur Verringerung von durch den Ketteneingriff einer Fahrtreppe oder eines Fahrsteigs erzeugten Schwingungen eine Fahrtreppe beziehungsweise einen Fahrsteig mit einem Schwingungsdämpfer, der innerhalb eines freitragenden Bereichs mit der Fahrtreppe beziehungsweise mit dem Fahrsteig verbunden ist. Die Fahrtreppe beziehungsweise der Fahrsteig ist dabei allerdings nicht dafür ausgebildet, Schwingungen von dem Gebäude reduziert auf die Fahrtreppe beziehungsweise den Fahrtsteig zu übertragen. Ein besonderer Schutz, der eine Übertragung von auftretenden Gebäudeschwingungen auf die Fahrtreppe verhindern würde, insbesondere bei dem Auftreten eines Erdbebens, besteht somit nicht.

Vor diesem Hintergrund ist es eine Aufgabe der Erfindung, eine Personenfördervorrichtung zu verbessern, insbesondere derart, dass diese verbessert gegen Schäden durch Erdbeben geschützt ist. Vorteilhafterweise sollen auf die Personenfördervorrichtung wirkende seismische Belastungen reduziert werden.

Zur Lösung dieser Aufgabe wird eine Personenfördervorrichtung und ein Verfahren zur Reduzierung der Übertragung von Schwingungen von einem Gebäude auf eine ein erstes Niveau dieses Gebäudes mit einem zweiten Niveau dieses Gebäudes verbindende Personenfördervorrichtung gemäß den unabhängigen Ansprüchen vorgeschlagen. Weitere vorteilhafte Ausgestaltungen der Erfindung sind in den abhängigen Ansprüchen und der Beschreibung beschrieben.

Die vorgeschlagene Lösung sieht eine Personenfördervorrichtung, insbesondere eine Fahrtreppe, vor, welche ein erstes Niveau eines Gebäudes, insbesondere eine erste Etage eines Gebäudes, mit einem zweiten Niveau des Gebäudes, insbesondere einer weitere Etage des Gebäudes, verbindet. Die Personenfördervorrichtung umfasst dabei ein Traggerüst mit wenigstens einem Trägerelement und wenigstens ein adaptives Schwingungsdämpfungssystem, wobei die Personenfördervorrichtung mit dem wenigstens einen Trägerelement über das wenigstens eine adaptive Schwingungsdämpfungssystem mit dem Gebäude verbunden ist. Es ist dabei insbesondere vorgesehen, dass die Personenfördervorrichtung zumindest teilweise freitragend ist.

Insbesondere ist vorgesehen, dass zwischen den jeweiligen Enden der Personenfördervorrichtung eine Vielzahl von miteinander verbundenen Trittelementen ein endloses Transportband bilden, welches von wenigstens einer Antriebseinheit, beispielsweise einer Asynchronmaschine, angetrieben wird und innerhalb des Traggerüstes angeordnet ist. Ist die Personenfördervorrichtung eine Fahrtreppe, ist das Transportband ein aus einer Vielzahl von miteinander verbundenen Stufen gebildetes Stufenband. Ist die Personenfördervorrichtung ein Fahrsteig, so ist das Transportband ein aus einer Vielzahl von miteinander verbundenen Paletten gebildetes Palettenband.

Das Traggerüst der Personenfördervorrichtung weist vorteilhafterweise eine Fachwerkstruktur auf. Insbesondere ist vorgesehen, dass an dem Traggerüst eine Balustrade, insbesondere eine Balustrade mit einem antreibbaren endlosen Handlauf, angeordnet ist. Weiter sind an dem Traggerüst insbesondere Verblendungen, insbesondere Aluminiumplatten, angeordnet.

Da das wenigstens eine Schwingungsdämpfungssystem der Personenfördervorrichtung adaptiv ausgebildet ist, also insbesondere an auftretende Schwingungen und/oder Stöße anpassbar ist, ist das wenigstens eine Schwingungsdämpfungssystem vorteilhafterweise ausgebildet, unterschiedlich ausgeprägte Schwingungen zu dämpfen. Das heißt insbesondere, dass das wenigstens eine Schwingungsdämpfungssystem nicht fix eingestellt ist, sondern sich an die auftretenden Schwingungen anpasst beziehungsweise anpassen lässt. Somit kann das wenigstens eine Schwingungsdämpfungssystem vorteilhafterweise auf unterschiedliche Schwingungen, insbesondere sowohl auf Schwingungen mit ausgeprägter Amplitude bei geringer Frequenz als auch auf Schwingungen mit weniger ausgeprägter Amplitude bei hoher Frequenz als auch auf überlagerte Schwingungen, so reagieren, dass diese Schwingungen kompensiert oder zumindest reduziert werden.

Vorteilhafterweise ist das wenigstens eine adaptive Schwingungsdämpfungssystem der Personenfördervorrichtung ausgebildet, eine Übertragung von Schwingungen des Gebäudes auf die Personenfördervorrichtung zu reduzieren beziehungsweise zu unterdrücken. Gebäudeschwingungen sind dabei insbesondere aufgrund von seismischer Aktivität, insbesondere aufgrund von Erdbeben, hervorgerufene Gebäudeschwingungen. Ohne adaptives Schwingungsdämpfungssystem würden die durch ein Erdbeben verursachten Gebäudeschwingungen direkt auf die Personenfördervorrichtung übertragen. Um diesen Belastungen Stand halten zu können, müsste die Personenfördervorrichtung konstruktiv aufwendiger konstruiert werden. Würde die Personenfördervorrichtung ein Schwingungsdämpfungssystem aufweisen, welches allerdings nicht adaptiv ausgebildet ist, bestünde zudem das Risiko, dass Resonanzen auftreten und durch das nicht adaptive Schwingungsdämpfungssystem die Gebäudeschwingungen sogar noch verstärkt auf die Personenfördervorrichtung wirken würden. Dadurch, dass Schwingungen des Gebäudes durch das adaptive Schwingungsdämpfungssystem hingegen weitestgehend von der Personenfördervorrichtung ferngehalten werden, ist eine erfindungsgemäß ausgebildete Personenfördervorrichtung vorteilhafterweise deutlich verbessert vor Schäden durch Erdbeben geschützt.

Insbesondere ist vorgesehen, dass das wenigstens eine adaptive Schwingungsdämpfungssystem hinsichtlich der Amplitude und/oder der Frequenz auftretender Schwingungen adaptierbar ist, insbesondere hinsichtlich der Amplitude und/oder der Frequenz außerhalb des Traggerüsts der Personenfördervorrichtung auftretender Schwingungen adaptierbar ist. Damit ist das wenigstens eine adaptive Schwingungsdämpfungssystem vorteilhafterweise weiter verbessert dazu ausgebildet, Schwingungen des Gebäudes jeweils adäquat zu dämpfen und somit die auf die Personenfördervorrichtung wirkenden Belastungen durch Gebäudeschwingungen zu reduzieren.

Vorteilhafterweise kann die Personenfördervorrichtung durch das wenigstens eine adaptive Schwingungsdämpfungssystem derart konstruiert werden, dass die Personenfördervorrichtung geringeren Belastungsspitzen standhalten muss, was vorteilhafterweise zu einer Gewichts- und Kostenreduzierung insbesondere bei der Herstellung des Traggerüstes der Personenfördervorrichtung führt.

Gemäß der erfindungsgemäßen Personenfördervorrichtung ist das wenigstens eine adaptive Schwingungsdämpfungssystem ausgebildet, Schwingungsdaten bezüglich außerhalb der Personenfördervorrichtung auftretender Schwingungen zu empfangen und auszuwerten, und die Dämpfungswirkung insbesondere in Abhängigkeit der empfangenen Schwingungsdaten anzupassen. Außerhalb der Personenfördervorrichtung auftretende Schwingungen sind dabei insbesondere Schwingungen des Gebäudes. Darüber hinaus sind weitere außerhalb der Personenfördervorrichtung auftretende Schwingungen insbesondere in der näheren Umgebung des Gebäudes, insbesondere innerhalb eines Radius von bis zu 1000 m (m: Meter) um das Gebäude, sowie in der weiteren Umgebung des Gebäudes, insbesondere innerhalb eines Radius von bis zu 100 km (km: Kilometer) um das Gebäude, auftretende Schwingungen, die seismischen Ursprungs sind.

Zum Empfangen der Schwingungsdaten umfasst das wenigstens eine adaptive Schwingungsdämpfungssystem gemäß einer vorteilhaften Ausgestaltung wenigstens eine Empfangseinheit. Das Empfangen von Schwingungsdaten kann insbesondere drahtlos, insbesondere über eine Luftschnittstelle, und/oder leitungsgebunden erfolgen.

Zum Auswerten der Schwingungsdaten umfasst das wenigstens eine adaptive Schwingungsdämpfungssystem gemäß einer weiteren vorteilhaften Ausgestaltung wenigstens eine Auswerteeinheit. Als Auswerteeinheit kann dabei insbesondere eine entsprechend programmierte Mikrocontrollerschaltung vorgesehen sein. Die Auswertung der Schwingungsdaten erfolgt dabei vorteilhafterweise insbesondere hinsichtlich der jeweiligen Amplitude von erfassten Schwingungen und/oder hinsichtlich der jeweiligen Frequenz von erfassten Schwingungen und/oder hinsichtlich des voraussichtlichen Auftreffens von außerhalb der Personenfördervorrichtung erfassten Schwingungen, insbesondere von innerhalb eines Radius von bis zu 100 km um das Gebäude erfassten Schwingungen, auf die Personenfördervorrichtung und/oder hinsichtlich einer Prädiktion von Gebäudeschwingungen ausgehend von außerhalb des Gebäudes erfassten seismischen Schwingungen, insbesondere in von innerhalb eines Radius von bis zu 100 km um das Gebäude erfassten seismischen Schwingungen.

Vorteilhafterweise ist das wenigstens eine adaptive Schwingungsdämpfungssystem ausgebildet, die Anpassung der Schwingungsdämpfungswirkung unter Berücksichtigung der Ergebnisse der Auswertung der empfangenen Schwingungsdaten durchzuführen. Insbesondere ist vorgesehen, dass das adaptive Schwingungsdämpfungssystem hierzu Stellmittel umfasst, die entsprechend dem Ergebnis der Auswertung angesteuert werden, und die die Dämpfungswirkung des wenigstens einen adaptiven Schwingungsdämpfungssystems beeinflussen. Insbesondere ist vorgesehen, dass jedes Dämpferelement des wenigstens einen Schwingungsdämpfungssystems von einem eigenen Stellmittel angesteuert wird. Gemäß einer Ausgestaltungsvariante erfolgt die Ansteuerung der einzelnen Dämpfungselemente des wenigstens einen Schwingungsdämpfungssystems über ein zentrales Stellelement. Dabei ist das zentrale Stellelement vorteilhafterweise ausgebildet, jedes Dämpfungselement individuell anzusteuern.

Gemäß einer weiteren vorteilhaften Ausgestaltung der Erfindung umfasst die Personenfördervorrichtung wenigstens eine außerhalb der Personenfördervorrichtung angeordnete Erfassungseinheit zur Erfassung von Schwingungsdaten, insbesondere zur Erfassung seismischer Aktivität und/oder zur Erfassung von Schwingungen des Gebäudes als Schwingungsdaten. Insbesondere kann eine solche Erfassungseinheit ein Seismograph sein. Mittels dieser wenigstens einen Erfassungseinheit werden Schwingungen vorteilhafterweise so frühzeitig erfasst, dass das adaptive Schwingungsdämpfungssystem auf diese Schwingungen eingestellt werden kann, sodass diese Schwingungen nicht oder zumindest durch das Schwingungsdämpfungssystem gedämpft auf die Personenfördervorrichtung übertragen werden. Insbesondere wenn die Personenfördervorrichtung ohne relevante seismische Aktivität betrieben wird, insbesondere wenn seitens der wenigstens einen Erfassungseinheit keine Schwingungen erfasst werden, ist das wenigstens eine adaptive Schwingungsdämpfungssystem vorteilhafterweise ausgebildet, Schwingungen die durch den Betrieb der Personenfördervorrichtung erzeugt werden, zu reduzieren, sodass die Personenfahrtreppe eine verbesserte Laufruhe aufweist.

Eine weitere vorteilhafte Ausgestaltung sieht vor, dass die Personenfördervorrichtung wenigstens ein Übertragungsmittel zur Übertragung der erfassten Schwingungsdaten an das wenigstens eine Schwingungsdämpfungssystem umfasst. Insbesondere ist ein Funkübertrager als Übertragungsmittel vorgesehen. Vorteilhafterweise ist das wenigstens eine Übertragungsmittel ausgebildet, die erfassten Schwingungsdaten über ein Mobilfunknetz an die wenigstens eine Empfangseinheit des wenigstens einen Schwingungsdämpfungssystems zu übertragen.

Gemäß einer weiteren besonders vorteilhaften Ausgestaltung der Erfindung umfasst das wenigstens eine adaptive Schwingungsdämpfungssystem wenigstens einen MRF-Dämpfer (MRF: magnetorheologische Flüssigkeit). Insbesondere ist vorgesehen, dass das wenigstens eine adaptive Schwingungsdämpfungssystem eine Vielzahl von MRF-Dämpfern umfasst. Diese MRF-Dämpfer arbeiten vorteilhafterweise mit einem speziellen magnetorheologischen Dämpferöl. Dadurch, dass das Dämpferöl winzige Metallpartikel umfasst, die magnetisch polarisiert werden können, wird durch entsprechende elektrische Ansteuerung ein Magnetfeld in dem Dämpfer ausgebildet. Durch das Magnetfeld lässt sich dabei vorteilhafterweise die Viskosität des Dämpferöls und damit die Dämpfungswirkung des Dämpfers anpassen.

Als vorteilhafte Ausgestaltungsvariante der Erfindung ist insbesondere vorgesehen, dass das wenigstens eine adaptive Schwingungsdämpfungssystem wenigstens einen ersten adaptiven Dämpfer umfasst, der zwischen dem Gebäude und dem wenigstens einen Trägerelement derart angeordnet ist, dass dieser Schwingungen bezüglich einer ersten Raumrichtung dämpft. Vorteilhafterweise werden hierdurch Schwingungen in eine erste Bewegungsrichtung (1. Translation) der Personenfördervorrichtung gedämpft.

Als vorteilhafte Weiterbildung dieser Ausgestaltungsvariante ist insbesondere vorgesehen, dass das wenigstens eine adaptive Schwingungsdämpfungssystem wenigstens einen zweiten adaptiven Dämpfer umfasst, der zwischen dem Gebäude und dem wenigstens einen Trägerelement derart angeordnet ist, dass dieser Schwingungen bezüglich einer zweiten Raumrichtung dämpft, wobei diese zweite Raumrichtung orthogonal zu der ersten Raumrichtung ist. Vorteilhafterweise werden hierdurch Schwingungen in eine erste Bewegungsrichtung (1. Translation) der Personenfördervorrichtung und in eine zweite Bewegungsrichtung (2. Translation) der Personenfördervorrichtung gedämpft.

Als weitere vorteilhafte Weiterbildung dieser Ausgestaltungsvariante ist insbesondere vorgesehen, dass das wenigstens eine adaptive Schwingungsdämpfungssystem wenigstens einen dritten adaptiven Dämpfer umfasst, der zwischen dem Gebäude und dem wenigstens einen Trägerelement derart angeordnet ist, dass dieser Schwingungen bezüglich einer dritten Raumrichtung dämpft, wobei diese dritte Raumrichtung orthogonal zu der ersten Raumrichtung und orthogonal zu der zweiten Raumrichtung ist. Vorteilhafterweise werden hierdurch Schwingungen in eine erste Bewegungsrichtung (1. Translation) der Personenfördervorrichtung und in eine zweite Bewegungsrichtung (2. Translation) der Personenfördervorrichtung und in eine dritte Bewegungsrichtung (3. Translation) der Personenfördervorrichtung gedämpft. Bei dieser Ausgestaltung ist die Personenfördervorrichtung vorteilhafterweise besonders gut gegen Schäden durch Gebäudeschwingungen geschützt.

Gemäß einer weiteren besonders vorteilhaften Ausgestaltung der Erfindung ist vorgesehen, dass das Traggerüst als das wenigstens eine Trägerelement ein erstes Trägerelement und ein zweites Trägerelement aufweist und die Personenfördervorrichtung als das wenigstens eine adaptive Schwingungsdämpfungssystem ein erstes adaptives Schwingungsdämpfungssystem und ein zweites adaptives Schwingungsdämpfungssystem aufweist, wobei die Personenfördervorrichtung mit dem ersten Trägerelement über das erste adaptive Schwingungsdämpfungssystem mit dem ersten Niveau des Gebäudes verbunden ist und mit dem zweiten Trägerelement über das zweite adaptive Schwingungsdämpfungssystem mit dem zweiten Niveau des Gebäudes verbunden ist. Vorteilhafterweise ist hierdurch die Übertragung von Schwingungen auf die Personenfördervorrichtung besonders gut reduziert.

Insbesondere ist vorgesehen, dass das erste Niveau des Gebäudes ein erstes Stockwerk des Gebäudes ist und das zweite Niveau des Gebäudes ein im Vergleich zu dem ersten Stockwerk tiefer gelegenes oder ein im Vergleich zu dem ersten Stockwerk höher gelegenes zweites Stockwerk des Gebäudes ist. Über wenigstens ein erstes Trägerelement ist die Personenfördervorrichtung dabei vorteilhafterweise mit dem ersten Stockwerk verbunden, wobei zwischen dem ersten Stockwerk und dem wenigstens einen ersten Trägerelement das erste adaptive Schwingungsdämpfungssystem angeordnet ist. Über wenigstens ein zweites Trägerelement ist die Personenfördervorrichtung zudem vorteilhafterweise mit dem zweiten Stockwerk verbunden, wobei zwischen dem zweiten Stockwerk und dem wenigstens einen zweiten Trägerelement das zweite adaptives Schwingungsdämpfungssystem angeordnet ist. Ist die Personenfördervorrichtung ein Fahrtsteig so kann das erste Niveau die gleiche Höhe aufweisen, wie das zweite Niveau.

Eine vorteilhafte Weiterbildung der Erfindung sieht vor, dass das erste Trägerelement ein erster Auflagerwinkel ist und das zweite Trägerelement ein zweiter Auflagerwinkel ist, wobei jeweils seitlich, frontseitig und unterhalb des jeweiligen Auflagerwinkels adaptive Dämpfer zum Gebäude hin angeordnet sind. Vorteilhafterweise werden auftretende Schwingungen dabei durch die adaptiven Dämpfer in alle drei translatorischen Bewegungsrichtungen der Personenfördervorrichtung gedämpft. Gebäudeschwingungen werden somit vorteilhafterweise unabhängig von Ihrer Wirkungsrichtung nicht oder zumindest reduziert auf die Personenfördervorrichtung übertragen.

Das zur Lösung der eingangs genannten Aufgabe vorgeschlagene Verfahren zur Reduzierung der Übertragung von Schwingungen von einem Gebäude auf eine ein erstes Niveau dieses Gebäudes mit einem zweiten Niveau dieses Gebäudes verbindende Personenfördervorrichtung, welche über wenigstens ein adaptives Schwingungsdämpfungssystem mit dem Gebäude verbunden ist, sieht insbesondere vor, dass Schwingungsdaten außerhalb der Personenfördervorrichtung erfasst werden, insbesondere Schwingungen des Gebäudes und seismische Daten als Schwingungsdaten, die erfassten Schwingungsdaten ausgewertet werden und das wenigstens eine adaptive Schwingungsdämpfungssystem in Abhängigkeit der ausgewerteten Schwingungsdaten bezüglich dessen Schwingungsdämpfung angepasst wird. Die Personenfördervorrichtung ist dabei vorzugsweise gemäß einer vorstehend genannten erfindungsgemäßen Personenfördervorrichtung ausgebildet. Diese Personenfördervorrichtung kann insbesondere die als vorteilhaft beschriebenen Merkmale einzeln oder in Kombination aufweisen.

Insbesondere ist vorgesehen, dass bei dem erfindungsgemäßen Verfahren das wenigstens eine adaptive Schwingungsdämpfungssystem unter Berücksichtigung der Amplitude und/oder der Frequenz erfasster Schwingungen adaptiert wird.

Bezüglich auftretender Schwingungen werden dabei vorteilhafterweise mittels wenigstens einer Erfassungseinheit, insbesondere mittels eines Seismographen, Schwingungsdaten erfasst. Insbesondere werden dabei Schwingungen des Gebäudes und/oder seismische Aktivitäten als Schwingungsdaten erfasst. Die Erfassung von Schwingungsdaten erfolgt vorteilhafterweise in einem Radius von bis zu 100 km um das die Personenfördervorrichtung aufweisende Gebäude.

Erfasste Schwingungsdaten werden vorteilhafterweise unter Nutzung wenigstens eines Übertragungsmittels, insbesondere einer Transceivereinheit, an das wenigstens eine adaptive Schwingungsdämpfungssystem übertragen. Gesendete Schwingungsdaten werden von der wenigstens einen Empfangseinheit des wenigstens einen adaptiven Schwingungsdämpfungssystems empfangen und wenigstens einer Auswerteeinheit des wenigstens einen adaptiven Schwingungsdämpfungssystems bereitgestellt. Diese wenigstens eine Auswerteeinheit wertet die empfangenen Schwingungsdaten aus. Unter Berücksichtigung der Ergebnisse der Auswertung werden dann die adaptiven Dämpfer des wenigstens einen adaptiven Schwingungsdämpfungssystems angesteuert, vorzugsweise über entsprechende Stellelemente. Vorteilhafterweise wird das wenigstens eine Schwingungsdämpfungssystem an auftretende Gebäudeschwingungen so gut angepasst, dass Gebäudeschwingungen nicht oder zumindest nur stark reduziert auf die Personenfördervorrichtung übertragen werden.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer perspektivischen Darstellung ein Ausführungsbeispiel für eine erfindungsgemäß ausgebildete Personenfördervorrichtung ohne Transportband;
- Fig. 2: in einer vereinfachten schematischen Seitenansicht ein Ausführungsbeispiel für einen Endbereich einer erfindungsgemäß ausgebildeten Personenfördervorrichtung; und
- Fig. 3: eine vereinfachte schematische Draufsicht auf das Ausführungsbeispiel für einen Endbereich einer erfindungsgemäß ausgebildeten Personenfördervorrichtung gemäß Fig. 2.

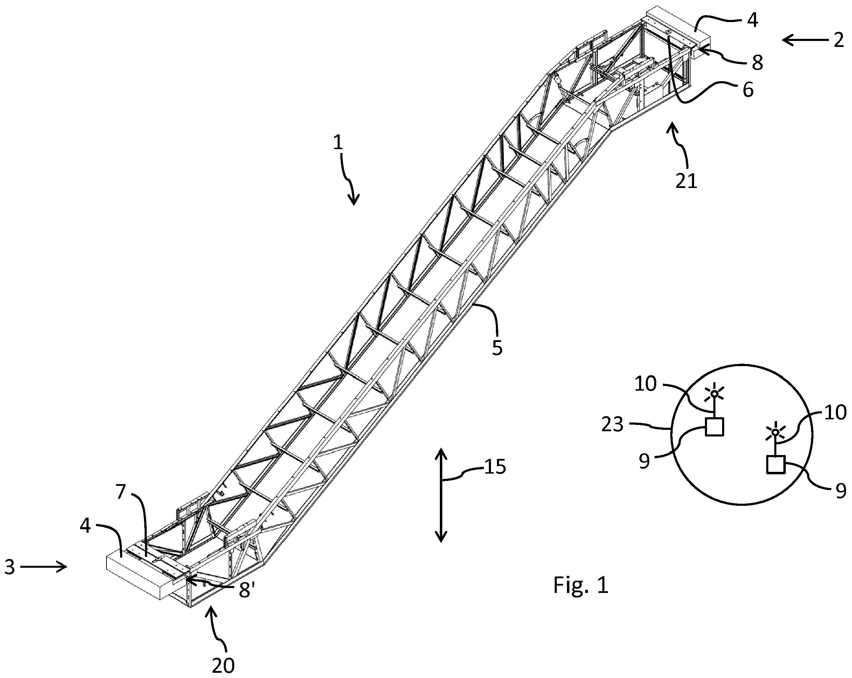

In dem in Fig. 1 gezeigten Ausführungsbeispiel ist die Personenfördervorrichtung 1 als teilweise freitragende Fahrtreppe ausgebildet, wobei als wesentlicher Bestandteil der Personenfördervorrichtung das Traggerüst 5 dargestellt ist. In dem Traggerüst 5 ist dabei zum Fördern von Personen üblicherweise ein aus einer Vielzahl von miteinander verbundenen Stufen gebildetes endloses Stufenband zusammen mit einer entsprechenden Antriebseinheit und Getriebeelementen angeordnet. An dem Traggerüst 5 sind des Weiteren üblicherweise eine Balustrade mit angetriebenen Handläufen sowie eine Verkleidung des Traggerüsts angeordnet. Da diese Anordnung von Transport, Antriebs- und Getriebeeinheit sowie Balustrade mit Handläufen und Verkleidung im Stand der Technik hinreichend bekannt ist und nicht zum Fokus der Erfindung gehört, ist diese Anordnung in Fig. 1 nicht dargestellt. Das Traggerüst 5 weist in dem Ausführungsbeispiel eine Fachwerkstruktur auf.

Wie in Fig. 1 schematisch dargestellt, verbindet die Personenfördervorrichtung 1 ein erstes Niveau 2 eines Gebäudes 4 mit einem zweiten Niveau des Gebäudes 4. Von dem Gebäude 4 ist dabei in Fig. 1 aus Gründen der besseren Übersichtlichkeit jeweils nur ein Stück des Tragwerks des Gebäudes 4 dargestellt.

Das erste Niveau 2 des Gebäudes kann dabei ein Stockwerk des Gebäudes 4 sein. Das zweite Niveau 3 ist in dem in Fig. 1 dargestellten Ausführungsbeispiel ein weiteres, tiefergelegenes Stockwerk.

Das Traggerüst 5 der Personenfördervorrichtung 1 gemäß dem in Fig. 1 dargestellten Ausführungsbeispiels umfasst an dessen oberem Ende 21 ein erstes Trägerelement 6 und an dessen unterem Ende 20 ein zweites Trägerelement 7. Die Trägerelemente 6, 7 können dabei insbesondere als Auflagerwinkel ausgebildet sein. Ferner umfasst die Personenfördervorrichtung 1 an dessen oberem Ende 21 ein erstes adaptives Schwingungsdämpfungssystem 8 (in Fig. 1 sind Details nicht explizit dargestellt) und an dessen unterem Ende 20 ein zweites adaptives Schwingungsdämpfungssystem 8' (in Fig. 1 sind Details nicht explizit dargestellt). Die Personenfördervorrichtung 1 ist dabei mit dem ersten Trägerelement 6 über das erste adaptive Schwingungsdämpfungssystem 8 und mit dem zweiten Trägerelement 7 über das zweite adaptive Schwingungsdämpfungssystem 8' mit dem Gebäude 4 verbunden.

Das erste adaptive Schwingungsdämpfungssystem 8 und das zweite adaptive Schwingungsdämpfungssystem 8' sind dabei jeweils ausgebildet, eine Übertragung von Schwingungen des Gebäudes 4 auf die Personenfördervorrichtung 1 zu reduzieren, insbesondere wenn das Gebäude 4 aufgrund eines Erdbebens in Schwingungen versetzt wird. Insbesondere sind die Schwingungsdämpfungssysteme 8, 8' dabei hinsichtlich der Amplitude und der Frequenz von außerhalb des Traggerüsts 5 auftretenden Schwingungen, also insbesondere Schwingungen des Gebäudes oder Schwingungen, die in einem vorbestimmten Radius um das Gebäude 4 auftreten, adaptierbar. Das heißt, die Schwingungsdämpfungssysteme 8, 8' können jeweils an auftretende Schwingungen derart angepasst werden, dass die Schwingungsdämpfungssysteme 8, 8' Schwingungen des Gebäudes 4 zumindest teilweise absorbieren. Schwingungen des Gebäudes 4 werden somit vorteilhafterweise nicht oder zumindest deutlich reduziert an das Traggerüst 5 und somit an die Personenfördervorrichtung 1 übertragen. Es versteht sich, dass das wenigstens eine Schwingungsdämpfungssystem der Personenfördervorrichtung 1 eine solche Reduzierung einer Übertragung von Schwingungen von dem Gebäude 4 auf die Personenfördervorrichtung 1 in einem Erdbebenfall nur bis zu einer bestimmten Stärke auf der Richterskala leisten kann. Insbesondere bei leichten bis mittleren Beben lassen sich durch das wenigstens eine adaptive Schwingungsdämpfungssystem vorteilhafterweise aber Schäden an der Personenfördervorrichtung 1 verhindern.

Bei dem in Fig. 1 dargestellten Ausführungsbeispiel umfassen das erste Schwingungsdämpfungssystem 8 und das zweite Schwingungsdämpfungssystem 8' beispielsweise jeweils erste adaptive Dämpfer (in Fig. 1 nicht explizit dargestellt). Diese adaptiven Dämpfer können insbesondere magnetorheologische Dämpfer (MRF-Dämpfer) sein, deren Dämpfungseigenschaften sich in Abhängigkeit einer elektrischen Ansteuerung ändern. Die adaptiven Dämpfer sind dabei zwischen dem Gebäude 4 und dem ersten Trägerelement 6 sowie zwischen dem Gebäude 4 und dem zweiten Trägerelement 7 jeweils derart angeordnet, dass diese Dämpfer Schwingungen bezüglich einer ersten Raumrichtung 15 adaptiv dämpfen können.

Das erste Schwingungsdämpfungssystem 8 und das zweite Schwingungsdämpfungssystem 8' der Personenfördervorrichtung 1 sind zudem ausgebildet, Schwingungsdaten bezüglich außerhalb der Personenfördervorrichtung auftretender Schwingungen zu empfangen und die empfangenen Schwingungsdaten auszuwerten. Hierzu umfassen die Schwingungsdämpfungssysteme 8, 8' jeweils eine Empfangseinheit (in Fig. 1 nicht explizit dargestellt), beispielsweise ein Empfangsmodem, und eine Auswerteeinheit (in Fig. 1 ebenfalls nicht explizit dargestellt), beispielsweise eine entsprechend programmierte Mikrocontrollerschaltung. In Abhängigkeit der Ergebnisse der Auswertung werden dann die adaptiven Dämpfer der Schwingungsdämpfungssysteme 8, 8' angesteuert.

Weist eine Personenfördervorrichtung 1 mehrere adaptive Schwingungsdämpfungssysteme auf, kann insbesondere auch vorgesehen sein, dass diese eine gemeinsame Empfangs- und Auswerteeinheit umfassen.

Zur Erfassung seismischer Aktivität als Schwingungsdaten umfasst die in Fig. 1 beispielhaft dargestellte Personenfördervorrichtung 1 Erfassungseinheiten 9, insbesondere Seismographen. In Fig. 1 sind beispielhaft zwei Erfassungseinheiten 9 dargestellt. Vorzugsweise umfasst die Personenfördervorrichtung 1 aber mehr als zwei Erfassungseinheiten, insbesondere zwischen zehn und dreißig Erfassungseinheiten. Diese Erfassungseinheiten 9 sind dabei vorteilhafterweise in der Umgebung 23 (in Fig. 1 symbolisch durch einen Kreis dargestellt) des Gebäudes 4 angeordnet. Zur Umgebung des Gebäudes 4 zählt dabei insbesondere ein Radius von bis zu 100 km um das Gebäude 4. Als weitere Erfassungseinheiten sind insbesondere an dem Gebäude 4 angebrachte Sensoren zur Erfassung von Gebäudeschwingungen vorgesehen (in Fig. 1 nicht explizit dargestellt).

Zur Übertragung der mittels der Erfassungseinheiten 9 erfassten Schwingungsdaten umfasst die Personenfördervorrichtung 1 zudem mit den Erfassungseinheiten 9 verbundene Übertragungsmittel 10, insbesondere Sendemodems. Dabei ist insbesondere eine Übertragung der Schwingungsdaten über ein Mobilfunknetz vorgesehen. Mittels der Übertragungsmittel 10 werden die Schwingungsdaten an die Empfangseinheiten der Personenfördervorrichtung 1 beziehungsweise der adaptiven Schwingungsdämpfungssysteme 8, 8' übertragen.

Insbesondere kann als Ausgestaltungsvariante hierzu vorgesehen sein, dass die Empfangseinheiten der in Fig. 1 dargestellten Personenfördervorrichtung 1 von einer zentralen Stelle, insbesondere einem Server mit einer entsprechenden Datenbank, Schwingungsdaten aus der Umgebung 23 des Gebäudes 4 abruft beziehungsweise empfängt und den Auswerteeinheiten bereitstellt. In der Umgebung 23 des Gebäudes 4 erfasste Schwingungsdaten werden dabei nicht direkt an die Personenfördervorrichtung 1 übertragen, sondern an die zentrale Stelle, von welcher die Schwingungsdaten dann an die Personenfördervorrichtung beziehungsweise die Empfangseinheit des wenigstens einen adaptiven Schwingungsdämpfungssystems übertragen werden.

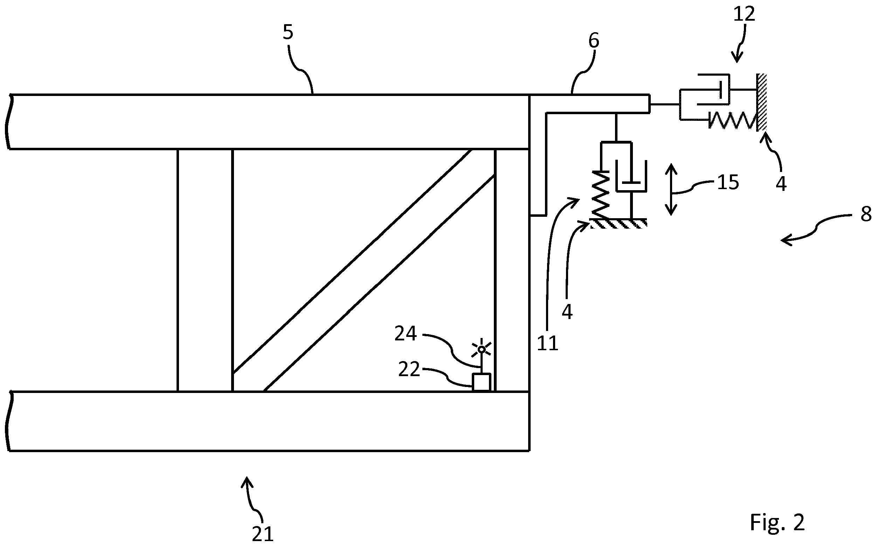

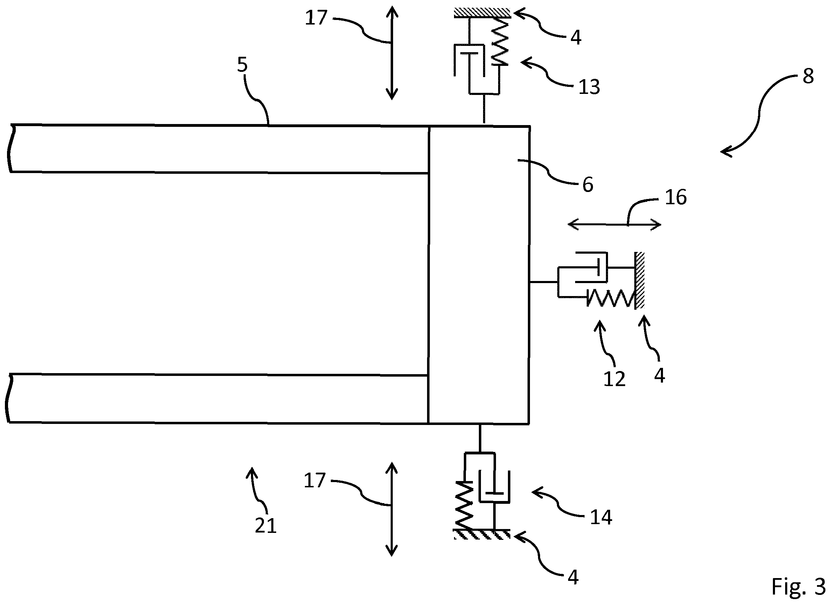

Unter Bezugnahme auf Fig. 2 und Fig. 3 wird ein weiteres Ausführungsbeispiel für eine erfindungsgemäß ausgebildete Personenfördervorrichtung näher erläutert. Die Personenfördervorrichtung kann dabei eine Fahrtreppe oder ein Fahrsteig sein. Dabei zeigt Fig. 2 eine Seitenansicht eines oberen Endes 21 einer Personenfördervorrichtung. In Fig. 3 ist eine Draufsicht auf das obere Ende 21 der Personenfördervorrichtung dargestellt.

Wie Fig. 2 und Fig. 3 jeweils zeigen, umfasst die Personenfördervorrichtung ein Traggerüst 5, welches mittels Stahlprofilen sowie senkrecht und diagonal verlaufender Streben eine Fachwerkstruktur ausbildet. Das Traggerüst 5 weist dabei an dem dargestellten oberen Ende 21 der Personenfördervorrichtung ein erstes Trägerelement 6 auf. Das Trägerelement 6 ist dabei ein Auflagerwinkel. An dem nicht dargestellten unteren Ende der Personenfördervorrichtung weist das Traggerüst 5 einen zweiten Auflagerwinkel als zweites Trägerelement auf. Das untere Ende der Personenfördervorrichtung entspricht hinsichtlich dessen Ausgestaltung im Wesentlichen dem oberen Ende 21 der Personenfördervorrichtung, sodass auf das untere Ende der Personenfördervorrichtung nachfolgend nicht explizit Bezug genommen wird.

Mit dem Trägerelement 6 ist die Personenfördervorrichtung an dem oberen Ende 21 über ein adaptives Schwingungsdämpfungssystem 8 (in Fig. 2 und Fig. 3 nur schematisch dargestellt) mit dem Gebäude 4 (in Fig. 2 und Fig. 3 aus Übersichtlichkeitsgründen nur vereinfacht dargestellt) verbunden. Das Schwingungsdämpfungssystem 8 ist ausgebildet, eine Übertragung von Schwingungen des Gebäudes 4 auf die Personenfördervorrichtung zu reduzieren. Dazu empfängt eine Empfangseinheit 24 des Schwingungsdämpfungssystems 8 Schwingungsdaten, die Sensoren (in Fig. 2 und Fig. 3 nicht explizit dargestellt) an dem Gebäude 4 erfassen, sowie Schwingungsdaten, die außerhalb des Gebäudes 4 erfasst werden, insbesondere Schwingungsdaten bezüglich seismischer Aktivität innerhalb eines Radius von bis zu 100 km um das Gebäude 4.

Die von der Empfangseinheit 24 empfangenen Schwingungsdaten werden von der Auswerteeinheit 22 des Schwingungsdämpfungssystems 8 ausgewertet. Unter Berücksichtigung des Ergebnisses der Auswertung wird dann das Schwingungsdämpfungssystem 8 adaptiert. Das Schwingungsdämpfungssystem 8 umfasst dabei in dem Ausführungsbeispiel mehrere adaptive Dämpfer, die jeweils über Stellelemente (in Fig. 2 und Fig. 3 nicht explizit dargestellt) entsprechend dem Auswertungsergebnis angesteuert werden, um bestmöglich das Übertragen von Schwingungen von dem Gebäude 4 auf die Personenfördervorrichtung zu unterdrücken. Die Dämpfer können insbesondere magnetorheologische Dämpfer sein.

Das Schwingungsdämpfungssystem 8 umfasst dabei insbesondere einen ersten adaptiven Dämpfer 11, der unterhalb des Trägerelementes 6 zum Gebäude 4 hin angeordnet ist. Dieser erste Dämpfer 11 ist dabei zwischen dem Gebäude 4 und dem Trägerelement 5 derart angeordnet, dass dieser Dämpfer 11 Schwingungen bezüglich einer ersten Raumrichtung 15 dämpft.

Darüber hinaus umfasst das Schwingungsdämpfungssystem 8 insbesondere einen zweiten Dämpfer 12, der frontseitig an dem Trägerelement 6 angeordnet ist. Diese Dämpfer 12 ist derart zwischen dem Gebäude 4 und dem Trägerelement 6 angeordnet, dass dieser Dämpfer 12 Schwingungen bezüglich einer zweiten Raumrichtung 16 dämpft, wobei diese zweite Raumrichtung 16 orthogonal zu der ersten Raumrichtung 15 ist.

Ferner umfasst das Schwingungsdämpfungssystem 8 insbesondere zwei dritte adaptive Dämpfer 13, 14, die seitlich an dem Trägerelement 6 angeordnet sind. Diese Dämpfer 13, 14 sind derart zwischen dem Gebäude 4 und dem Trägerelement 6 angeordnet, dass diese Dämpfer 13, 14 Schwingungen bezüglich einer dritten Raumrichtung 17 dämpfen, wobei diese dritte Raumrichtung 17 orthogonal zu der ersten Raumrichtung 15 und orthogonal zu der zweiten Raumrichtung 16 ist.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Personenfördervorrichtung
- 2: erstes Niveau
- 3: zweites Niveau
- 4: Gebäude
- 5: Traggerüst
- 6: erstes Trägerelement
- 7: zweites Trägerelement
- 8: erstes adaptives Schwingungsdämpfungssystem
- 8': zweites adaptives Schwingungsdämpfungssystem
- 9: Erfassungseinheit
- 10: Übertragungsmittel
- 11: erster Dämpfer
- 12: zweiter Dämpfer
- 13: dritter Dämpfer
- 14: vierter Dämpfer
- 15: Pfeil zur Darstellung einer ersten Raumrichtung
- 16: Pfeil zur Darstellung einer zweiten Raumrichtung
- 17: Pfeil zur Darstellung einer dritten Raumrichtung
- 18: Auswerteeinheit
- 19: Empfangseinheit
- 20: unteres Ende
- 21: oberes Ende
- 22: Auswerteeinheit
- 23: Umgebung
- 24: Empfangseinheit

## Patentansprüche

1. Personenfördervorrichtung (1), insbesondere Fahrtreppe, welche ein erstes Niveau (2) eines Gebäudes (4) mit einem zweiten Niveau (3) des Gebäudes (4) verbindet, umfassend ein Traggerüst (5) mit wenigstens einem Trägerelement (6, 7), **gekennzeichnet durch** wenigstens ein adaptives Schwingungsdämpfungssystem (8), wobei die Personenfördervorrichtung (1) mit dem wenigstens einen Trägerelement (6, 7) über das wenigstens eine adaptive Schwingungsdämpfungssystem (8) mit dem Gebäude (4) verbunden ist, und wobei das wenigstens eine adaptive Schwingungsdämpfungssystem (8) ausgebildet ist, Schwingungsdaten bezüglich außerhalb der Personenfördervorrichtung (1) auftretender Schwingungen zu empfangen und auszuwerten, und die Dämpfungswirkung in Abhängigkeit der empfangenen Schwingungsdaten anzupassen.

2. Personenfördervorrichtung (1) nach Anspruch 1, **dadurch gekennzeichnet, dass** das wenigstens eine adaptive Schwingungsdämpfungssystem (8) ausgebildet ist, eine Übertragung von Schwingungen des Gebäudes (4) auf die Personenfördervorrichtung (1) zu reduzieren.

3. Personenfördervorrichtung (1) nach einem der vorstehenden Ansprüche, **dadurch gekennzeichnet, dass** das wenigstens eine adaptive Schwingungsdämpfungssystem (8) hinsichtlich der Amplitude und/oder der Frequenz außerhalb des Traggerüstes (5) auftretender Schwingungen adaptierbar ist.

4. Personenfördervorrichtung (1) nach einem der vorstehenden Ansprüche, **gekennzeichnet durch** wenigstens eine außerhalb der Personenfördervorrichtung (1) angeordnete Erfassungseinheit (9) zur Erfassung von Schwingungsdaten, insbesondere zur Erfassung seismischer Aktivität und/oder zur Erfassung von Schwingungen des Gebäudes (4) als Schwingungsdaten.

5. Personenfördervorrichtung (1) nach Anspruch 4, **gekennzeichnet durch** wenigstens ein Übertragungsmittel (10) zur Übertragung der erfassten Schwingungsdaten an das wenigstens eine adaptive Schwingungsdämpfungssystem (8).

6. Personenfördervorrichtung (1) nach einem der vorstehenden Ansprüche, **dadurch gekennzeichnet, dass** das wenigstens eine adaptive Schwingungsdämpfungssystem (8) wenigstens einen MRF-Dämpfer umfasst.

7. Personenfördervorrichtung (1) nach einem der vorstehenden Ansprüche, **dadurch gekennzeichnet, dass** das wenigstens eine adaptive Schwingungsdämpfungssystem (8) wenigstens einen ersten adaptiven Dämpfer (11) umfasst, der zwischen dem Gebäude (4) und dem wenigstens einen Trägerelement (6, 7) derart angeordnet ist, dass dieser Schwingungen bezüglich einer ersten Raumrichtung (15) dämpft.

8. Personenfördervorrichtung (1) nach Anspruch 7, **dadurch gekennzeichnet, dass** das wenigstens eine adaptive Schwingungsdämpfungssystem (8) wenigstens einen zweiten adaptiven Dämpfer (12) umfasst, der zwischen dem Gebäude (4) und dem wenigstens einen Trägerelement (6, 7) derart angeordnet ist, dass dieser Schwingungen bezüglich einer zweiten Raumrichtung (16) dämpft, wobei diese zweite Raumrichtung (16) orthogonal zu der ersten Raumrichtung (15) ist.

9. Personenfördervorrichtung (1) nach Anspruch 8, **dadurch gekennzeichnet, dass** das wenigstens eine adaptive Schwingungsdämpfungssystem (8) wenigstens einen dritten adaptiven Dämpfer (13, 14) umfasst, der zwischen dem Gebäude und dem wenigstens einen Trägerelement (6, 7) derart angeordnet ist, dass dieser Schwingungen bezüglich einer dritten Raumrichtung (17) dämpft, wobei diese dritte Raumrichtung (17) orthogonal zu der ersten Raumrichtung (15) und orthogonal zu der zweiten Raumrichtung (16) ist.

10. Personenfördervorrichtung (1) nach einem der vorstehenden Ansprüche, **dadurch gekennzeichnet, dass** das Traggerüst (5) als das wenigstens eine Trägerelement ein erstes Trägerelement (6) und ein zweites Trägerelement (7) aufweist und die Personenfördervorrichtung (1) als das wenigstens eine adaptive Schwingungsdämpfungssystem ein erstes adaptives Schwingungsdämpfungssystem (8) und ein zweites adaptives Schwingungsdämpfungssystem (8') aufweist, wobei die Personenfördervorrichtung (1) mit dem ersten Trägerelement (6) über das erste adaptive Schwingungsdämpfungssystem (8) mit dem ersten Niveau (2) des Gebäudes (4) verbunden ist und mit dem zweiten Trägerelement (7) über das zweite adaptive Schwingungsdämpfungssystem (8') mit dem zweiten Niveau (3) des Gebäudes (4) verbunden ist.

11. Personenfördervorrichtung (1) nach Anspruch 10, **dadurch gekennzeichnet, dass** das erste Trägerelement (6) ein erster Auflagerwinkel ist und das zweite Trägerelement (7) ein zweiter Auflagerwinkel ist, wobei jeweils seitlich, frontseitig und unterhalb des jeweiligen Auflagerwinkels adaptive Dämpfer (11, 12, 13, 14) zum Gebäude (4) hin angeordnet sind.

12. Verfahren zur Reduzierung der Übertragung von Schwingungen von einem Gebäude (4) auf eine ein erstes Niveau (2) dieses Gebäudes (4) mit einem zweiten Niveau (3) dieses Gebäudes (4) verbindende Personenfördervorrichtung (1), insbesondere eine Fahrtreppe, welche über wenigstens ein adaptives Schwingungsdämpfungssystem (8) mit dem Gebäude (4) verbunden ist, **dadurch gekennzeichnet, dass** Schwingungsdaten außerhalb der Personenfördervorrichtung (1) erfasst werden, insbesondere Schwingungen des Gebäudes (4) und seismische Daten als Schwingungsdaten, die erfassten Schwingungsdaten ausgewertet werden und das wenigstens eine Schwingungsdämpfungssystem (8) in Abhängigkeit der ausgewerteten Schwingungsdaten bezüglich dessen Schwingungsdämpfung angepasst wird.

13. Verfahren nach Anspruch 12, **dadurch gekennzeichnet, dass** die Personenfördervorrichtung eine Personenfördervorrichtung nach einem der Ansprüche 1 bis 11 ist.

## Claims

1. Person-conveying device (1), in particular an escalator, which connects a first level (2) of a building (4) to a second level (3) of the building (4), comprising a supporting frame (5) having at least one carrier element (6, 7), **characterized by** at least one adaptive vibration damping system (8), wherein the person-conveying device (1) is connected to the building (4) by the at least one carrier element (6, 7) via the at least one adaptive vibration damping system (8), and wherein the at least one adaptive vibration damping system (8) is designed to receive and evaluate vibration data with respect to vibrations occurring outside the person-conveying device (1), and to adapt the damping action on the basis of the received vibration data.

2. Person-conveying device (1) according to Claim 1, **characterized in that** the at least one adaptive vibration damping system (8) is designed to reduce the transmission of vibrations from the building (4) to the person-conveying device (1).

3. Person-conveying device (1) according to one of the preceding claims, **characterized in that** the at least one adaptive vibration damping system (8) is adaptable with regard to the amplitude and/or the frequency of vibrations occurring outside the supporting frame (5).

4. Person-conveying device (1) according to one of the preceding claims, **characterized by** at least one detection unit (9) arranged outside the person-conveying device (1) for the detection of vibration data, in particular for the detection of seismic activity and/or for the detection of vibrations of the building (4) as vibration data.

5. Person-conveying device (1) according to Claim 4, **characterized by** at least one transmission means (10) for transmitting the detected vibration data to the at least one adaptive vibration damping system (8).

6. Person-conveying device (1) according to one of the preceding claims, **characterized in that** the at least one adaptive vibration damping system (8) comprises at least one MRF damper.

7. Person-conveying device (1) according to one of the preceding claims, **characterized in that** the at least one adaptive vibration damping system (8) comprises at least one first adaptive damper (11), which is arranged between the building (4) and the at least one carrier element (6, 7) in such a way that it damps vibrations with respect to a first spatial direction (15).

8. Person-conveying device (1) according to Claim 7, **characterized in that** the at least one adaptive vibration damping system (8) comprises at least one second adaptive damper (12), which is arranged between the building (4) and the at least one carrier element (6, 7) in such a way that it damps vibrations with respect to a second spatial direction (16), wherein this second spatial direction (16) is orthogonal to the first spatial direction (15).

9. Person-conveying device (1) according to Claim 8, **characterized in that** the at least one adaptive vibration damping system (8) comprises at least one third adaptive damper (13, 14), which is arranged between the building and the at least one carrier element (6, 7) in such a way that it damps vibrations with respect to a third spatial direction (17), wherein this third spatial direction (17) is orthogonal to the first spatial direction (15) and orthogonal to the second spatial direction (16).

10. Person-conveying device (1) according to one of the preceding claims, **characterized in that** the supporting frame (5) has a first carrier element (6) and a second carrier element (7) as the at least one carrier element, and **in that** the person-conveying device (1) has a first adaptive vibration damping system (8) and a second adaptive vibration damping system (8') as the at least one adaptive vibration damping system, wherein the person-conveying device (1) is connected by the first carrier element (6) to the first level (2) of the building (4) via the first adaptive vibration damping system (8), and is connected by the second carrier element (7) to the second level (3) of the building (4) via the second adaptive vibration damping system (8').

11. Person-conveying device (1) according to Claim 10, **characterized in that** the first carrier element (6) is a first supporting angle and the second carrier element (7) is a second supporting angle, wherein adaptive dampers (11, 12, 13, 14) are arranged with respect to the building (4) respectively at the side, at the front and underneath the respective supporting angle.

12. Method for reducing the transmission of vibrations from a building (4) to a person-conveying device (1) connecting a first level (2) of this building (4) to a second level (3) of this building (4), in particular an escalator, which is connected to the building (4) via at least one adaptive vibration damping system (8), **characterized in that** vibration data are detected outside the person-conveying device (1), in particular vibrations of the building (4) and seismic data as vibration data, the detected vibration data is evaluated and the vibration damping of the at least one vibration damping system (8) is adapted on the basis of the evaluated vibration data.

13. Method according to Claim 12, **characterized in that** the person-conveying device is a person-conveying device according to one of Claims 1 to 11.

## Revendications

1. Dispositif de transport de personnes (1), en particulier un escalier mécanique, reliant un premier niveau (2) d'un bâtiment (4) avec un deuxième niveau (3) du bâtiment (4), comprenant une ossature (5), elle-même comprenant au moins un élément support (6, 7), **caractérisé par** au moins un système d'amortissement des vibrations adaptatif (8) le dispositif de transport de personnes (1) étant relié au bâtiment (4) avec l'au moins un élément support (6, 7) par le biais de l'au moins un système d'amortissement des vibrations adaptatif (8) et l'au moins un système d'amortissement des vibrations adaptatif (8), étant conçu pour recevoir et exploiter des données de vibration concernant des vibrations se produisant à l'extérieur du dispositif de transport de personnes (1) et pour adapter l'effet vibratoire en fonction des données de vibration reçues.

2. Dispositif de transport de personnes (1) selon la revendication 1, **caractérisé en ce que** l'au moins un système d'amortissement des vibrations adaptatif (8) est conçu pour réduire les vibrations du bâtiment (4) qui sont transmises au système de transport des personnes (1).

3. Dispositif de transport de personnes (1) selon l'une quelconque des revendications précédentes, **caractérisé en ce que** l'au moins un système d'amortissement des vibrations adaptatif (8) est capable de s'adapter à l'amplitude et/ou à la fréquence des vibrations se produisant à l'extérieur de l'ossature (5).

4. Dispositif de transport de personnes (1) selon l'une quelconque des revendications précédentes, **caractérisé par** au moins une unité d'acquisition (9) disposée à l'extérieur du dispositif de transport de personnes (1) pour collecter des données de vibration et, en particulier, pour détecter sous forme de données de vibration une activité sismique et/ou des vibrations du bâtiment (4).

5. Dispositif de transport de personnes (1) selon la revendication 4, **caractérisé par** au moins un moyen de transmission (10) destiné à transmettre les données de vibration collectées à l'au moins un système d'amortissement de vibrations adaptatif (8).

6. Dispositif de transport de personnes (1) selon l'une quelconque des revendications précédentes, **caractérisé en ce que** l'au moins un système d'amortissement de vibrations adaptatif (8) comprend au moins un amortisseur MRF.

7. Dispositif de transport de personnes (1) selon l'une quelconque des revendications précédentes, **caractérisé en ce que** l'au moins un système d'amortissement de vibrations adaptatif (8) comprend au moins un premier amortisseur adaptatif (11) qui est disposé entre le bâtiment (4) et l'au moins un élément support (6, 7) de manière à amortir les vibrations relatives à une première direction spatiale (15).

8. Dispositif de transport de personnes (1) selon la revendication 7, **caractérisé en ce que** l'au moins un système d'amortissement de vibrations adaptatif (8) comprend au moins un deuxième amortisseur adaptatif (12) qui est disposé entre le bâtiment (4) et l'au moins un élément support (6, 7), de manière à amortir les vibrations relatives à une deuxième direction spatiale (16), cette deuxième direction spatiale (16) étant orthogonale à la première direction spatiale (15).

9. Dispositif de transport de personnes (1) selon la revendication 8, **caractérisé en ce que** l'au moins un système d'amortissement de vibrations adaptatif (8) comprend au moins un troisième amortisseur adaptatif (13, 14) qui est disposé entre le bâtiment et l'au moins un élément support (6, 7), de manière à amortir les vibrations relatives à une troisième direction spatiale (17), cette troisième direction spatiale (17) étant orthogonale à la première direction spatiale (15) et orthogonale à la deuxième direction spatiale (16).

10. Dispositif de transport de personnes (1) selon l'une quelconque des revendications précédentes, **caractérisé en ce que** l'ossature (5) présente, en tant que l'au moins un élément support, un premier élément support (6) et un deuxième élément support (7) et le dispositif de transport de personnes (1) présente, en tant que l'au moins un système d'amortissement des vibrations adaptatif, un premier système d'amortissement des vibrations adaptatif (8) et un deuxième système d'amortissement des vibrations adaptatif (8'), le dispositif de transport de personnes (1) étant relié au premier niveau (2) du bâtiment (4) par le premier élément support (6) par l'intermédiaire du premier système d'amortissement de vibrations adaptatif (8), et étant relié au deuxième niveau (3) du bâtiment (4) par le deuxième élément support (7) par l'intermédiaire du deuxième système d'amortissement de vibrations adaptatif (8').

11. Dispositif de transport de personnes (1) selon la revendication 10, **caractérisé en ce que** le premier élément support (6) est une première cornière d'appui et le deuxième élément support (7) est une deuxième cornière d'appui, des amortisseurs adaptatifs (11, 12, 13, 14) étant disposés en direction du bâtiment (4) respectivement sur le côté, sur la face avant et au-dessous de chaque cornière d'appui.

12. Procédé destiné à réduire le transfert de vibrations d'un bâtiment (4) à un dispositif de transport de personnes (1), en particulier un escalier mécanique, reliant un premier niveau (2) de ce bâtiment (4) à un deuxième niveau (3) de ce bâtiment (4) et étant relié au bâtiment (4) par le biais d'au moins un dispositif d'amortissement de vibrations adaptatif (8), **caractérisé en ce que** des données de vibration extérieures au dispositif de transport de personnes (1) sont collectées, en particulier des vibrations du bâtiment (4) et des données de nature sismique sont exploitées et l'au moins un dispositif d'amortissement des vibrations adaptatif (8) adapte son amortissement vibratoire en fonction des données de vibration exploitées.

13. Procédé selon la revendication 12, **caractérisé en ce que** le dispositif de transport de personnes est un dispositif de transport de personnes selon l'une quelconque des revendications 1 à 11.
